(19) Europäisches Patentamt / European Patent Office / Office européen des brevets

(11) **EP 2 351 887 A2**

(12) **EUROPEAN PATENT APPLICATION**

(43) Date of publication:
**03.08.2011 Bulletin 2011/31**

(51) Int Cl.:
**E03B 7/02** (2006.01)  **G05D 7/06** (2006.01)
**E03B 1/02** (2006.01)

(21) Application number: **11162312.0**

(22) Date of filing: **19.05.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **19.05.2008 GB 0808985**

(62) Document number(s) of the earlier application(s) in accordance with Art. 76 EPC:
**09784579.6 / 2 313 564**

(71) Applicant: **The University Of Exeter**
**Exeter, Devon EX4 4QJ (GB)**

(72) Inventors:
  • **Savic, Dragan**
    **Exeter EX4 8LG, Devon (GB)**
  • **Kapelan, Zoran**
    **Exeter EX4 2QN, Devon (GB)**

• **Morley, Mark**
  **Exeter EX4 6HB, Devon (GB)**
• **Vamvakeridou-Lyroudia, Lydia**
  **Exeter EX4 9HP, Devon (GB)**
• **Bicik, Josef**
  **Exeter EX4 6NG, Devon (GB)**
• **Awad, Haytham**
  **Exeter EX4 6BH, Devon (GB)**

(74) Representative: **ABB Patent Attorneys**
**C/o ABB Schweiz AG**
**Intellectual Property (CH-LC/IP)**
**Brown Boveri Strasse 6**
**5400 Baden (CH)**

Remarks:
This application was filed on 13-04-2011 as a divisional application to the application mentioned under INID code 62.

(54) **Water distribution systems**

(57) Control method for use in the evaluation of faults in water distribution, the method comprising the steps of:
(a) receiving a fault notification;
(b) determining from the fault notification a series of potential causes of the notified fault;
(c) determining, for each potential cause, an impact evaluation;
(d) aggregating the impact evaluations for each potential cause to derive an importance indication for the notified fault.

Figure 6. Estimation of risk imposed by an anomaly

**Description**

This invention relates to a water distribution system, and in particular to methods and systems for use in the design and operation of such a water system. Although most of the description herein is directed towards mains cold water supply, it will be appreciated that the invention is equally applicable to other utilities such as district heating systems in which hot water is being supplied.

It is desirable to reduce excess water pressure within water distribution systems as reductions in the water pressure can lead to reductions in, for example, the loss of water through leakage from the system. One way in which this can be achieved is through the use of pressure reducing valves (PRVs). Typically, a PRV is installed in a water distribution system in such a manner as to ensure that the minimum required water pressure is maintained at one or more critical locations within the system. However, difficulties are experienced in trying to determine the most appropriate location for the PRVs and also in determining the most appropriate type of PRV to install at a given location. One object of the invention is to provide a method and system for use in the design of a water system to assist in determining appropriate locations for PRVs and/or to assist in determining the appropriate type of PRV to install at a given location.

The benefits of using PRVs in achieving reductions in leakage and in reducing the frequency of future burst pipes have been explored. For example, Girard, M., and Stewart, R. A. (2007). "Implementation of pressure and leakage management strategies on the gold coast, Australiantegrated energy and water conservation modeling." Journal of Water Resources Planning and Management, ASCE, Vol. 133(3), 210-217 describes a technique for evaluating the leakage reduction that can be achieved by using PRVs, and Bragalli, C., and Sacchi, S. (2002). "Burst frequency and leakage related to pressure control in water distribution network". Proceedings of IWA Special Conference 'Managing Leakage', Lemesos, Cyprus, November 2002, 80-94 describes techniques whereby the cost savings resulting from reductions in future pipe bursts can be evaluated.

Where it is thought that a fault may have developed in a water distribution system, for example as a result of the receipt of sensor signals suggesting that a fault may have developed, or the receipt of, for example, customer reports suggesting that a fault may have developed, there is a need to evaluate the potential fault to determine the likely seriousness thereof, and hence to determine how urgently the potential fault requires investigation by an engineer. In the event that several potential faults occur simultaneously or at relatively closely spaced intervals, it may be necessary to prioritise response thereto in order to maximise the efficient use of engineers. It is therefore another object of the invention to provide a control arrangement whereby potential fault notifications can be evaluated and, if necessary, prioritised for response. Also, the effects of various potential network interventions can be explored.

According to one aspect of the invention there is provided a method for use in the design of a water distribution by determining whether to locate a pressure reducing valve (PRV) in a given location comprising the steps of:

(a) determining the benefit arising from reduced water leakage achieved by locating a PRV in that location;
(b) determining the benefit arising from reduced pipe burst frequency achieved by locating a PRV in that location;
(c) determining the benefit arising from at least one other parameter achieved by locating a PRV in that location;
(d) determining the cost associated with locating a PRV at that location;
(e) calculating a net benefit value using the benefits and costs determined in steps (a) to (d); and
(f) locating a PRV in that location if the calculated net benefit value exceeds a predetermined value.

It will be appreciated that by using the method set out hereinbefore, the benefit of locating a PRV in a chosen location can be accurately modelled, thereby assisting in determining whether or not it is worthwhile installing the PRV in that location. By repeating the method for a series of different locations, the method can be used to determine a most appropriate one of the locations in which to install the PRV.

It will further be appreciate that the method can be used not only to determine whether or where to install a PRV but also to assist in determining, by repetition of the method, the relative merits of a series of different types of PRV, and hence assist in determining which type of PRV is best installed at a given location. The method can thus be used to determine whether a fixed-setting, time or flow modulated PRV is best suited for use in a given location.

Preferably the method further includes a step of determining or proposing the most suitable location, type and setting for a number of PRVs.

The at least one parameter preferably comprises one or more parameters selected from a list including pressure-sensitive demand reductions, direct energy savings, reductions in active leakage control effort, reductions in customer contacts, indirect water savings and indirect energy savings. Preferably all of these parameters are taken into account in calculation of the net benefit value.

The step of calculating the net benefit value preferably involves calculation of:

$$F = CLW + CBR + CDR + CDE + CAL + CCC + CIW + CIE - CPRV$$

where F = net benefit of introducing pressure reduction (£/year); $CLVV$ = benefit from reducing water leakage (£/year); $CBR$ = benefit from reducing pipes' burst frequency (£/year); $CDR$ = pressure-sensitive demand reduction benefit (£/year); $CDE$ = benefit from direct energy saving (£/year); $CAL$ = benefit from reducing active leakage control effort (£/year); $CCC$ = benefit from reducing customer contacts (£/year); $CIW$ = benefit from indirect water saving (£/year); $CIE$ = benefit from indirect energy saving (£/year); and $CPRV$ = annual cost of installing and/or operating all pressure reducing valves (£/year). The values of these parameters may be derived in a number of ways, and specific examples of ways of deriving them are set out hereinafter.

**Water Leakage Reduction Benefit**

Two different methodologies have been applied and compared for calculating the annual leakage reduction cost; the NWC method described in "Leakage control policy and practice." Standing Technical Committee Report, Number 26, Department of Environmental, National Water Council, Britain, and the International Water Association - Water Loss Task Force (IWA-WLTF) method described in Fantozzi, M., and Lambert, A. (2007). "Including the effects of Pressure Management in calculations of Economic Leakage Level." Proceedings of IWA Special Conference 'Water Loss 2007', Bucharest, Romania, 23-26 September 2007, 256-267. In both methods the water leakage ($WL$) has been assumed to form a proportion of total DMA water demand. The annual benefit from reducing water leakage $CLW$(£/year) in both methods is estimated as follows:

$$CLW = (WL_0 - WL_1) \times CWP$$

where $WL_0$ = annual water leakage before pressure reduction (m³/year); $WL_1$ = annual water leakage after pressure reduction (m³/year); and $CWP$ = unit cost of water at the DMA entrance (£/m³) which presents the costs of buying water from a supplier and water treatment including costs of chemicals and power inside the treatment plant.

The NWC method has been initially developed for estimating the leakage reduction on DMA level as a function of Average Zone Pressure ($AZP$) in meters. The method is based on computing the "leakage index" which allows comparison of relative leakage rates due to changes in the average zone or network pressure. The Leakage Index ($LI$) is calculated as follows:

$$LI = 0.553 \times AZP + 0.00367 \times (AZP)^2$$

The leakage reduction is then estimated as follows:

$$\frac{WL_1}{WL_0} = \frac{LI_1}{LI_0}$$

where $LI_0$ and $LI_1$ are the leakage indices before and after pressure reduction, respectively.

The second methodology applied to estimate the water leakage reduction is the IWA-WLTF method which assumes that reduction of water leakage in water distribution networks is a function of pressure change as follows:

$$\frac{WL_1}{WL_0} = \left(\frac{P_1}{P_0}\right)^{N_1}$$

where $P_0$ = pressure before reduction (m); $P_1$ = pressure after reduction (m); and $N_1$ = leakage exponent (varies between 0.5 and 2.5) which is a function of a pipe material and type of failure. Here, $N_1$ is assumed to be a function of pipe material only.

In order to use either of the above two methods in the algorithm, leakage (and hence reduction of it) needs to be estimated at (i.e. allocated to) each network node. For this reason, the total water leakage $(WL_0)$ has been distributed between the network nodes according to: (1) the *LI* value for each node in the NWC method and $P_0^{N_1}$ value for each node in the IWA-WLTF method and (2) sum of lengths of half pipes connected to the analysed node.

**Burst Frequency Reduction Benefit**

The annual burst frequency reduction benefit *CBR* (£/year) is estimated as follows:

$$CBR = \left(BF_0 - BF_1\right) \times CB$$

where $BF_0$ = annual burst frequency before pressure reduction (bursts/year); $BF_1$ = annual burst frequency after pressure reduction (bursts/year); and *CB* = average cost of repairing a burst (£/burst, assumed constant here but could be related to the pipe diameter). The burst frequency reduction is estimated in accordance with the teaching of Pearson, D., Fantozzi, M., Soares, D., and Waldron, T. (2005). "Searching for N2: How does Pressure Reduction reduce Burst Frequency?" Proceedings of IWA Special Conference 'Leakage 2005', Halifax, Nova Scotia, Canada, 12-14 September 2005, 368-381 as follows:

$$\frac{BF_1}{BF_0} = \left(\frac{P_1}{P_0}\right)^{N_2}$$

where: $P_0$ and $P_1$ are the pressure (m) before and after reduction, respectively; $N_2$ = burst exponent which can be a function of traffic loading, pipe cover depth, working pressure in relation with surges and design pressure, pipe age, soil conditions, quality of installation, pipe material, and change in temperature. UKWIR (2003). *"*Leakage Index Curve and the Longer Term Effects of Pressure Management." Report 03/WM/08/29, 2003, ISBN 1084057-280-9 recommends a value of $N_2$ = 0.5 as a *pessimistic* one. Thornton, J., and Lambert, A. (2005). "Progress in Practical Prediction of Pressure: Leakage, Pressure: Burst Frequency and Pressure: Consumption Relationships". Proceedings of IWA Special Conference 'Leakage 2005', Halifax, Nova Scotia, Canada, 12-14 September 2005, 347-357. suggest, from a number of limited studies, that $N_2$ value could be anywhere in the range 0.5 to 6.5 while the analysis of more than 50 international sites done by Pearson et al. mentioned above shows that $N_2$ values varied between 0.2 and 8.5 (mean value of 2.47) for mains' breaks and between 0.2 and 12 (mean value of 2.36) for service pipe breaks. In all above references the pressure before and after reduction is evaluated as the *average* hydraulic pressure in the system. The results of a recent study on 112 systems from 10 countries estimates the average value of $N_2$ = 1.4 for pressures estimated as *maximum* hydraulic pressures in the system (over all nodes and loading conditions). The latter approach is used here. Again, as in the case of leakage, pipe bursts are allocated to each network node using the same logic outlined in the previous section.

**Pressure-Sensitive Demand Reduction Net Benefit**

The net benefit due to pressure-sensitive demand reduction $CDR$ (£/year) is estimated as follows:

$$CDR = CDR_a - CDR_b$$

where $CDR_a$ = benefit from reducing water demand (£/year) and $CDR_b$ = loss in revenue for water utility due to reducing water demand (£/year). These two values are estimated as follows:

$$CDR_a = \left[WD_0^* - WD_1^*\right] \times \left[CWP + RWW \times CWWT\right]$$

$$CDR_b = PMD \times \left[WD_0^* - WD_1^*\right] \times CWT$$

where: $WD_0^*$ and $WD_1^*$ are the pressure-sensitive annual water demand (m$^3$/year) before and after pressure reduction; $CWP$ = unit cost of water at the DMA entrance (£/m$^3$); $RWW$ = ratio of volume of waste water to produced water; $CWWT$ = unit cost of treating wastewater including costs of chemicals and power used in the wastewater treatment plant (£/m$^3$); $PMD$ = percentage of total demand that is metered; $CWT$ = water price paid by the customer for using water supply and wastewater collection services (£/m$^3$). The pressure sensitive demands $WD_0^*$ and $WD_1^*$ can be estimated in accordance with the teaching of Fantozzi, M., and Lambert, A. (2007). "Including the effects of Pressure Management in calculations of Economic Leakage Level." Proceedings of IWA Special Conference 'Water Loss 2007', Bucharest, Romania, 23-26 September 2007, 256-267 as follows:

$$WD_0^* = PSR \cdot WD_0$$

$$WD_1^* = WD_0^* \left(\frac{P_1}{P_0}\right)^{N_3}$$

where: $PSR$ = percentage of total demand $WD_0$ that is pressure sensitive; $P_0$ and $P_1$ = actual pressure before and after reduction (evaluated at network node level); $N_3$ = empirical exponent. According to the Fantozzi and Lambert paper mentioned above the value of $N_3$ varies between 0.1 for internal residential consumption and 0.5 for external consumption. If the customer has a roof tank then $N_3$ is equal to zero.

Calculation of the net benefit due to pressure-sensitive demand reduction is evaluated at each node and each time step using actual pressure values. The computed value can be negative in which case it represents a cost rather than a net benefit to the water company.

**Direct Energy Reduction Benefit**

Reducing water demand and leakage will also reduce the energy required for lifting the saved quantity of water. The total benefit of direct energy saved $CDE$ (£/year) is estimated as follows:

$$CDE = CLW \times HP \times [D_0 - D_1]$$

where $D_0 = WD_0 + WL_0$ = total network consumption before pressure reduction (m$^3$/year); $D_1 = WD_1 + WL_1$ = total network consumption after pressure reduction (m$^3$/year); $WD_0$ and $VVD_1$ = water demand before and after pressure reduction (m$^3$/year); $CLW$ = cost of lifting water (£/meter lift/m$^3$) and $HP$ = pumping head (m).

## Active Leakage Control Effort Reduction Benefit

One of the potential benefits of reducing pressure is the reduction in the effort required for active leakage control (due to reduced pipe burst frequency, see above). This benefit ($CAL$, £/year) can be estimated as follows:

$$CAL = CAL_0 \times \left( 1 - \frac{BF_1}{BF_0} \right)$$

where $CAL_0$ = active leakage control cost before pressure reduction (£/year; estimated from the historical costs arising from the (average) labour, vehicle and/or sub-contractors usage to do the ALC).

## Customer Contacts Reduction Benefit

In some water systems, costs related to customer contacts can present a significant cost. The purpose of customer contacts is usually classified as follows: (i) Burst or leak, (ii) No water, (iii) Low pressure, (iv) Discoloured water, (v) Hard water, (vi) High pressure, (vii) Bill complaint, or (viii) other. The following equation is used here to estimate the benefit of customer contact reduction:

$$CCC = N_4 \times (n_1 \times c_1 + n_2 \times c_2 + n_3 \times c_3)$$

where $C_1$ = initial cost of dealing with customer contact (simple call centre's response, £/contact); $C_2$ = cost of a contact that needs a follow-up call; $C_3$ = cost of contact which needs a follow-up visit (£/contact); $n_1$ = number of initial contacts per year; $n_2$ = number of follow-up calls per year; $n_3$ = number of follow-up visit per year; and $N_4$ = percent reduction in customer contacts as a consequence of pressure management.

## Indirect Water Reduction Benefit

This saving includes the effect of reducing water losses inside water treatment plant and transmission pipelines as an effect of water reduction. It has been assumed, in accordance with DeMonsabert, S., and Liner, B. L. (1998). "Integrated energy and water conservation modeling." Journal of Energy Engineering, ASCE, Vol. 124(1), 1-19, that indirect water reduction Benefit $CIW$ (£/year) presents 10% of the saved water, as follows:

$$CIW = 0.10 \times CWP \times [D_0 - D_1]$$

## Indirect Energy Reduction Benefit

The DeMonsabert paper mentioned above states that, for all electricity generated, roughly 5% is used in-plant and 8% is lost in distribution through line losses. To include the effect of all saved power by implementing pressure management schemes, the indirect energy reduction benefit *CIE* (£/year) is estimated by 13% from the energy saved inside water treatment plant, lifting water, and treating wastewater. It is also assumed here that the average energy used inside water treatment and wastewater treatment plants are 0.40 kWh/m$^3$ and 0.75 kWh/m$^3$, respectively. The CIE is then estimated as follows:

$$CIE = 0.13 \times CEP \times [0.40 \times (D_0 - D_1) + 0.75 \times (WD_0 - WD_1)] + 0.13 \times CDE$$

where CEP = cost of energy produced (£/kWh).

**Annual Cost of Pressure Reducing Valves**

The annual cost of all PRVs installed in the system is estimated as follows:

$$CPRV = \sum_{j=1}^{N} CPRV_j = \sum_{j=1}^{N} CCPRV_j \times (CRF_j + MC_j)$$

where $CCPRV_j$ = capital cost of j-th PRV (£); $MC_j$ = percentage of annual maintenance; and $CRF_j$ = capital recovery factor used for estimating annual costs from capital costs according to the annual interest rate (*I*) and the PRV lifetime (*M*) in years using the following relation described in Hicks, T. G. (1999). "Handbook of Civil Engineering Galculations." McGraw-Hill:

$$CRF_j = \frac{I_j (1 + I_j)^{M_j}}{(1 + I_j)^{M_j} - 1}$$

According to another aspect of the invention there is provided a control method for use in the evaluation of faults, the method comprising the steps of:

(a) receiving a fault notification;
(b) determining from the fault notification a series of potential causes of the notified fault;
(c) determining, for each potential cause, an impact evaluation;
(d) aggregating the impact evaluations for each potential cause to derive an importance indication for the notified fault.

The step of determining an impact evaluation for each potential cause may include determining the likelihood of that potential cause being the actual cause giving rise to the fault notification. The impact evaluation may be dependent upon, for example, the type or number of customers affected by the notified fault.

The importance indication can be used to determine how quickly the notified fault requires a response, and also to determine a priority or order in which a series of notified faults should be investigated. The method may also be used to determine the effects of various solutions to a reported fault.

The method may be incorporated into a system, for example a computer system.

The invention will further be described, by way of example, with reference to the accompanying drawings, in which:

Figures 1 a and 1 b are illustrations of parts of two water distribution systems;

Figures 2 and 3 are graphs illustrating the effects of the use of different types of PRV on pressures in parts of the system shown in Figure 1 a; and

Figures 4 to 9 are diagrams illustrating control methodologies for use in the evaluation of potential faults.

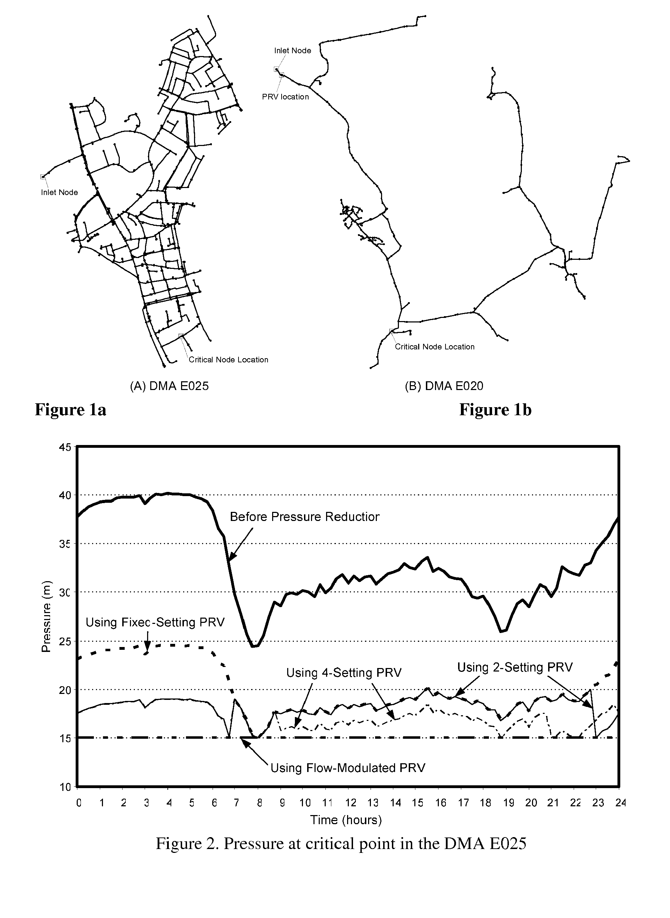

Figures 1a and 1b illustrate parts of two water distribution systems, identifying the location of the inlet and the location of the critical node, ie the part of the system or DMA in which a minimum water pressure has to be maintained. In each case, the proposed location of the PRV is at the inlet. However, it will be appreciated that the invention is not restricted to such location of the PRV, and is equally applicable to determining whether or not to locate a PRV elsewhere in the DMA.

The DMA illustrated in Figure 1 a does not yet include a PRV. The DMA has a single inlet and is supplying water by gravity. The total pipe length is 24,744 m. The hydraulic model of this DMA consists of 1,005 nodes and 1,082 pipes. The total water consumption is about 1,877 m³/day distributed as follows: measured water demand equal to 452.6 m³/day (24%), unmeasured water demand equal to 900.1 m³/day (48%) and water leakage equal to 524.3 m³/day (28%). The calibrated hydraulic model shows that the minimum pressure recorded over a typical daily demand pattern with the 15 min time step is 24.44 m. Figure 2 shows the time variation of the minimum pressure at the critical node before pressure reduction.

The second DMA as shown in Figure 1b has a fixed-setting PRV already installed at its inlet. It also has a single entry point and is supplying water to the customers by gravity. The total pipe length is 28,386 m. The hydraulic model of the DMA consists of 362 nodes and 368 pipes. The total water consumption, which is equal to 377.4 m³/day, is distributed as follows: measured water demand equal to 132.2 m³/day (35%), unmeasured water demand equal to 183.9 m³/day (49%) and water leakage of 61.3 m³/day (16%). The minimum pressure in current conditions is 22.5 m at 7:45 am.

The methodology described herein can be used to determine the best type, location and settings of PRVs in a DMA. In the description herein, as mentioned above, the method is being used to determine the best type of PRV to locate at the DMA inlet, but the same methodology may be used to determine, for example, the most appropriate location for a PRV. For both illustrated DMAs the method is used to determine which type of PRV to install from a list comprising: (1) single setting PRV, (2) time-modulated PRV with two and four daily switching periods, and (3) flow modulated PRV. The relevant PRV settings are determined as follows:

1. For a fixed-setting PRV, the pressure at the DMA entrance is reduced by the amount leading to the target minimum pressure at the DMA critical point (i.e. by the amount equal to the difference between the minimum recorded pressure in the DMA before implementing the pressure management scheme and the target minimum pressure).

2. For a time modulated PRV, the PRV setting for each switching period (two or four) is determined by satisfying the minimum acceptable pressure during that time period. Economic net benefits are then calculated for all possible cases (equal to $T!/P!(T-P)!$ where $P$ is the number of switching periods and $T$ is the number of daily loading conditions/ time steps); and the solution with maximum benefit is selected by the total enumeration method. Therefore, for a time-modulated PRV with two-switching periods, the number of daily cases evaluated is 4,560 when using 96 time steps (every 15 min). In the case of PRV with four-switching periods, time step was increased to 1 hour leading to 10,626 possible cases evaluated.

3. For the flow-modulated PRV, the setting of PRV at each time step has been selected in order to maintain the minimum acceptable pressure at the critical node for all time steps/loading condition. In other words, the PRV setting at each time step is equal to the sum of minimum acceptable pressure and the friction loss occurring between the PRV location and the critical node.

The target (i.e. minimum acceptable/required) pressure is assumed equal to 15m in all above cases analysed.

Based on three-year long data records, the average cost of repairing a pipe burst for the illustrated DMAs are 1,099 £/burst and 977 £/burst, respectively.

The portion of water demand which is pressure sensitive was assumed equal to PSR=0.1 and $N_3$ equal to 0.3. The volume of wastewater to water ($RWW$) was assumed to be 95%.

For the calculation of active leakage control effort before pressure reduction, it has been assumed that the ALC team could investigate 20 km weekly with a cost of 1,000 £/week. In addition, pipes have been grouped according to Table 1 for the routine inspection.

Table 1

| Pipe Diameter (mm) | Inspection |
|---|---|
| <= 100 | Every 2 years |
| >100 & <=200 | Every 1 year |
| >200 | Every 6 months |

The $N_4$ which has been used for estimating the customer contacts reduction benefits was assumed to be 0.3. The number of customer contacts per year is 129 and 276 for the DMAs, respectively. Based on the type and purpose of each contact and the feedback received by the water company, the cost of each contact has been estimated and classified. Subsequently, the customer contacts cost has been estimated and the expected benefit has been evaluated for the DMA of Figure 1a, which equals 2,121 £/year while for the DMA of Figure 2b equals 1,199 £/year.

The annual PRV cost has been estimated based on the PRV lifetime of $M$ = 15 years, the interest rate $I$ = 5 %, and the percentage of annual maintenance $MC$ = 10%. For the DMA of Figure 1b which has a fixed-setting PRV already installed, the capital cost of time-modulated or flow-modulated PRVs has been considered as the difference between their costs and the cost of the fixed-setting PRV. Other values used in the cost model are shown in Table 2.

Table 2

| | Symbol | Value | Unit |
|---|---|---|---|
| Cost of water produced | $CWP$ | 0.05 | £/m$^3$ |
| Cost of wastewater treatment | $CWWT$ | 0.40 | £/m$^3$ |
| Customer charge for drinking water and sewerage | $CWT$ | 2.204 | £/m$^3$ |
| Cost of energy produced | $CEP$ | 0.04 | £/m$^3$ |
| Cost of lifting water | $CLW$ | 0.2 | £/m life/1000m$^3$ |
| Capital cost of PRV (Fixed) | | 20,000 | £ |
| Capital cost of PRV (Time-modulated) | $CCPRV$ | 25,000 | £ |
| Capital cost of PRV (Flow-modulated) | | 30,000 | £ |
| Cost of initial contact | $C_1$ | 2 | £/contact |
| Cost of follow-up call | $C_2$ | 10 | £/contact |
| Cost of follow-up visit | $C_3$ | 65 | £/contact |

Table 3 shows the detailed values of all benefits and costs obtained for both DMAs. The associated benefit/ cost ratios are presented in Table 4.

Table 3

| DMA | Figure 1a | | | | Figure 1b | | | |
|---|---|---|---|---|---|---|---|---|
| Benefits/ Costs | Fixed Setting | Time-Modulated 2-Setting | 4-Setting | Flow Modulated | Fixed Setting | Time-Modulated 2-Setting | 4-Setting | Flow Modulated |
| A. Benefits Leakage reduction - WLTF method (£/ year):$CLW$ | 2678 | 3046 | 3271 | 3680 | 166 | 215 | 268 | 319 |
| Leakage reduction - NWC method (£/ year): $CLW$[1] | 2960[1] | 3354[1] | 3591[1] | 4019[1] | 185[1] | 240[1] | 296[1] | 351[1] |
| Burst Frequency reduction (£/year); $CBR$ | 10994 | 4026 | 14812 | 17554 | 2323 | 4146 | 4928 | 6081 |

(continued)

| DMA | Figure 1a | | | | Figure 1b | | | |
|---|---|---|---|---|---|---|---|---|
| Benefits/ Costs | Fixed Setting | Time-Modulated 2-Setting | 4-Setting | Flow Modulated | Fixed Setting | Time-Modulated 2-Setting | 4-Setting | Flow Modulated |
| Pressure-sensitive demand reduction (£/year); $CDR_a$ | 1843 | 1997 | 2234 | 2537 | 218 | 250 | 334 | 407 |
| Direct energy reduction (£/year); $CDE$ | 578 | 656 | 706 | 795 | 38 | 49 | 61 | 73 |
| Active leakage contro effort reduction (£/year): $CAL$ | 325 | 414 | 437 | 518 | 128 | 228 | 271 | 334 |
| Customer contracts reduction (£/year); $CCC$ | 2121 | 2121 | 2121 | 2121 | 1199 | 1199 | 1199 | 1199 |
| Indirect water reduction (£/year); $CIW$ | 289 | 328 | 353 | 398 | 19 | 24 | 31 | 37 |
| Indirect energy reduction (£/year); $CIE$ | 212 | 240 | 259 | 292 | 15 | 19 | 24 | 28 |
| Total benefits (£/year) | 19040 | 22828 | 24193 | 27895 | 4106 | 6130 | 7116 | 8478 |
| B. Costs Pressure-sensitive demand reduction (£/year); $CDR_b$ (100% measured demand) (£/year) | 3161 (9448) | 3425 (10237) | 3831 (11452) | 4352 (13008) | 467 (1117) | 536 (1282) | 715 (1710) | 873 (2088) |

(continued)

| DMA | Figure 1a | | | | Figure 1b | | | |
|---|---|---|---|---|---|---|---|---|
| Benefits/ Costs | Fixed Setting | Time-Modulated 2-Setting | 4-Setting | Flow Modulated | Fixed Setting | Time-Modulated 2-Setting | 4-Setting | Flow Modulated |
| Annual Cost of PRV (£/ year); *CPRV* | 3927 | 4909 | 4909 | 5890 | 2000 | 2982 | 2982 | 3963 |
| Total costs (£/year) (100% measured demand) (£/year) | 7088 (13375) | 8334 (15146) | 8740 (16361) | 10242 (18898) | 2467 (3117) | 3518 (4264 ) | 3697 (4692) | 4836 (6051) |
| Net benefit (£/year); F (100% measured demand) (£/year) | 11952 (5665) | 14494 (7682) | 15453 (7832) | 17653 (8997) | 1639 (989) | 2612 (1866) | 3419 (2424) | 3642 (2427) |

[1] not included in the calculation of total benefits

Table 4

| DMA | Figure 1a | | | | Figure 1b | | | |
|---|---|---|---|---|---|---|---|---|
| Benefits/ Costs | Fixed Setting | Time-Modulated 2-Setting | 4-Setting | Flow Modulated | Fixed Setting | Time-Modulated 2-Setting | 4-Setting | Flow Modulated |
| Present Measured Demand Percentage | 2.69 | 2.74 | 2.77 | 2.72 | 1.66 | 1.74 | 1.92 | 1.75 |
| 100% Measured Demand | 1.42 | 1.51 | 1.48 | 1.48 | 1.32 | 1.44 | 1.52 | 1.40 |

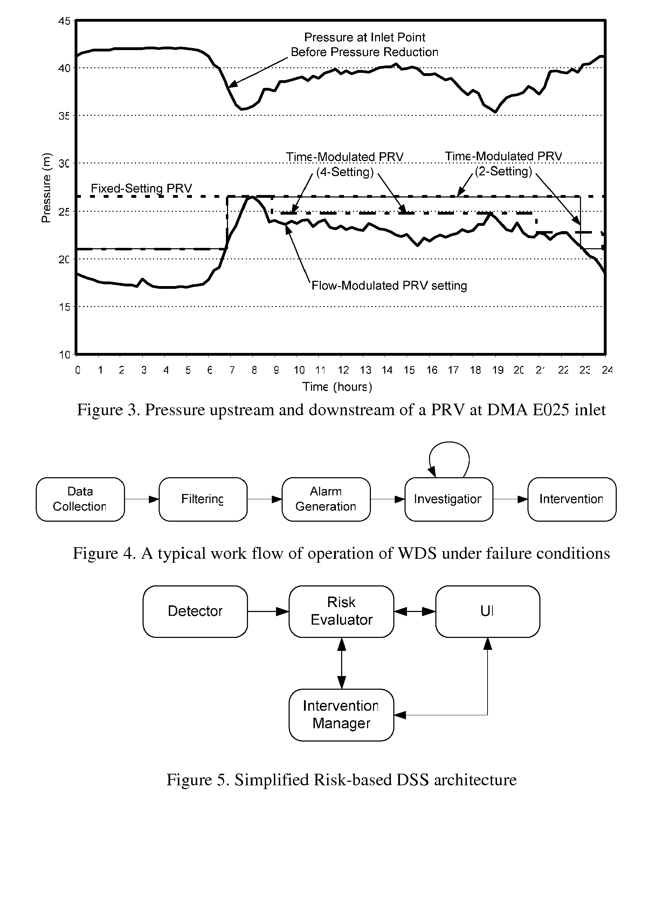

As it can be seen from Table 3, in the case of the first DMA, based on the current percentage of measured demand (33.46%), the annual net benefit of introducing pressure management schemes is ranging from 11,952 £/year when using a fixed-setting PRV to 17,653 £/year for a flow-modulated PRV (see Figure 2). This net benefit is reduced to as much as 5,665 £/year for a fixed-setting PRV and 8,997 £/year for a flow modulated PRV once all water demand becomes metered. Further results obtained in the case of the first DMA, are shown in Figures 2 and 3. Figure 2 shows the pressure at the critical DMA point assuming two cases, no pressure reduction and reduction by using different PRV types. Figure 3 shows the pressure profile upstream (DMA inlet) and immediately downstream of each PRV.

In the case of the second DMA, it can be seen from Table 3, that reducing the setting of the existing fixed outlet PRV from 41.5 m to 34.0 m will result in the (additional) net benefit of 1,639 £/year. If that PRV is replaced with a time-modulated PRV, the net benefit could reach 3,419 £/year and in case of a flow-modulated PRV 3,642 £/year. Therefore, the benefits associated with reducing pressure in the case of a time and especially flow modulated PRVs justify the replacement of an existing PRV. Finally, note that, as in the case of other DMA, once the water demand becomes completely metered, the maximum net benefit will be reduced (to 2,427 £/year).

The following additional observations can be made based on the results presented in Table 3 and 4 and Figures 2 and 3:

1. In both case studies analysed it was possible to obtain significant cost savings by introducing some pressure management scheme. Based on the absolute net benefits obtained, the most efficient pressure reduction is achieved by installing the flow-modulated PRV. Based on the benefit/cost ratio the most efficient pressure management scheme is the one involving four-setting time-modulated PRVs. The least efficient pressure management scheme is the one based on fixed-setting PRV.

2. The burst frequency reduction benefit in both DMAs appears to be the most significant benefit (more significant than leakage reduction benefit).

3. Reducing pressure sensitive demand is one of the most significant benefit/cost items. In both cases analysed here, the obtained value is negative. This means that the loss in revenue due to the reduction in pressure-sensitive demand outweighs the benefit obtained from reducing the pressure-sensitive water demand. Furthermore, this type of cost increases with the increase in percentage of measured demand.

4. For the presented two case studies, benefits from direct and indirect energy savings, indirect water savings, and active leakage control effort reduction are small in comparison to other benefits for all PRV schemes analysed.

5. The WLTF method produces slightly lower leakage reduction benefits when compared to the NWC method (approximately 10% in both case studies analysed). This is due to the fact that the two methods produce slightly different leakage estimates.

Finally, note that additional benefits and costs exist that were not included in the analyses performed here, but could potentially be significant in other water systems. These include: (i) increased asset life, (ii) pedestrian, domestic, and road traffic disruptions (iii) reduction in compensation/insurance claims, (iv) reduction in environmental and social impact, and (v) customers inconvenience reduction.

The methodology described herein is beneficial in that it permits evaluation of the net benefit associated with the PRV-based pressure management in water distribution systems. A number of principal benefits were identified and associated cost models developed. The models developed rely on various company/other data (e.g. existing leakage rate, current/target system pressure, pipe materials, current burst frequency, fraction of demand which is pressure-sensitive, percentage of measured properties, cost of produced water, etc). Most of the cost models suggested are approximate and may be updated in the future. It preferably further includes an automated optimisation procedure to determine the most suitable location, type and setting of a number of PRVs in a system to maximise the net benefit and trade-off different numbers of PRVs against the corresponding benefits.

The results obtained demonstrate that significant benefits can be achieved when using PRV-based pressure management schemes. The most efficient schemes seem to be based on the flow and multi set-point time modulated PRVs.

As described, hereinbefore, dealing with failure conditions is one of the primary functions of water distribution system (WDS) operators. However, the process of discovering that the WDS is not functioning normally, investigating the problems and deciding on how to deal with them is still difficult, even with the recent progress in monitoring and communication technologies. Data coming from sensors and notifications from customers in the form of phone calls are the two main indicators that a problem has occurred in a WDS that warrants further investigation and possibly repairs. The operator then has to check and process information coming from various systems in order to assess whether the perceived problem in the network is real, rather than a consequence of malfunctioning monitoring and communication devices. The investigation depends strongly on the internal business processes of the particular water utility but frequently requires a field technician to be sent out to visually inspect the situation at a particular location and confirm (or not) the potential problem. A simplified work flow capturing the steps involved in the operation of WDS when an anomaly is detected is depicted in Figure 4.

Furthermore, in situations where several alarms in water network control are occurring simultaneously, the operator is forced to prioritise both investigative and intervention actions with dynamically changing information about the potential incidents. The purpose of an integrated decision support system (DSS) is to filter and generate alarms in a more intelligent fashion, to partially automate the process of investigation (while taking into account the potential risks and threats associated with an alarm) and to assist in the prioritisation of both investigative and intervention actions. A DSS which operates on the basis of risk assessment of failure conditions could comprise of several fundamental modules whose interaction is shown in Figure 5.

- The Detector module is responsible for recognition of anomalies in time series data and customer contacts. When a sufficient level of confidence is gained that an anomaly is a true event an alarm is raised to notify the operator. The detector also identifies a set of potential incidents that could be the cause of a particular anomaly.

- The Risk Evaluator (RE) processes the inputs from the detector and assesses the risks caused by potential incidents (based on the likelihood of occurrence and potential impact on customers) also considering the operator's attitude towards risk. It then proceeds to aggregate these partial risks in order to calculate a single measure reflecting the overall risk of an anomaly, which is then used to prioritise the alarm it triggered.

- The Intervention Manager (IM) generates a set of possible responses to a particular incident. In addition to proposing pre-generated solutions (from a knowledge base), it also enables the operators to develop their own solutions by modifying existing ones or by creating a completely new response, which is then stored in the knowledge base for future use. It interacts closely with the RE to estimate the reduction of risk after the implementation of a chosen response.

- The Graphical User Interface (GUI) is used by the operator to interact with the DSS, prioritise actions, interactively access information coming from the field and to explore alternatives showing how to best respond to failure conditions. It further serves as a means of presenting spatial-temporal data in the form of risk maps generated by the RE corresponding to levels of risk of a particular incident.

The RE and IM modules, which form the core of the DSS architecture, are described herein in greater detail.

Risk Evaluator

For the purpose of this document *risk* is defined as a set of triplets comprising of risk scenario, probability and impact. The task of the RE is to evaluate the probability of occurrence of a particular potential incident, under a particular risk scenario (defined below) and to estimate its impact over a specified period of time (typically 24 hours). The RE is also utilised if an intervention is proposed to mitigate the impact of a particular incident for computing the subsequent reduction of risk (i.e. reduction of the impact) for the same (or alternative) risk scenarios.

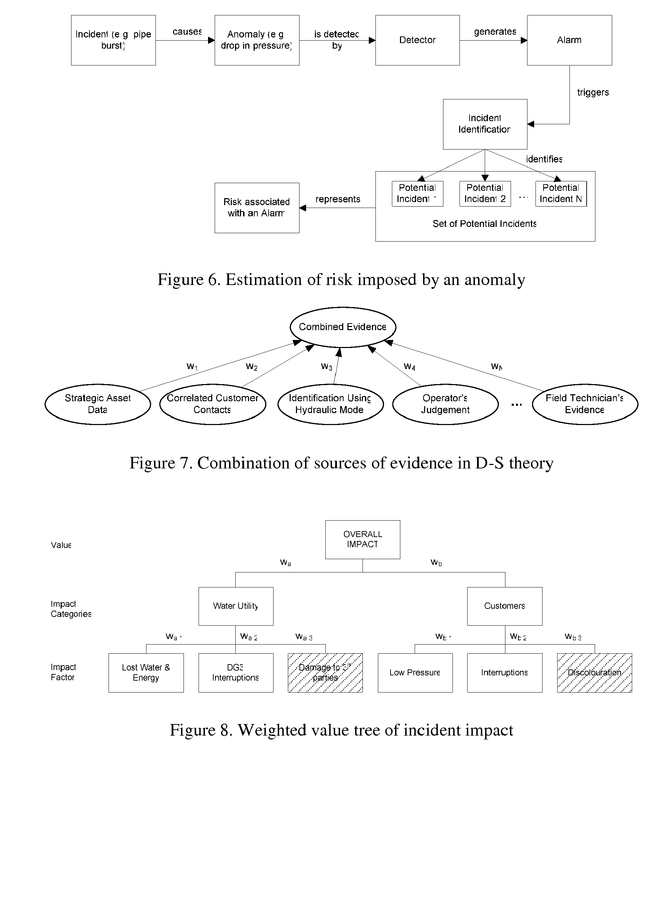

The estimation of risk associated with an alarm for the purpose of prioritisation of actions is shown in Figure 6. The risk is estimated by generating a set of the most likely causes (potential incidents) of the anomaly, calculating the probability of occurrence and impact of each of the potential incidents within the set and aggregating the overall risk of the set - for a given risk scenario. To incorporate the operator's attitude towards risk into the process of prioritising alarms, an aggregation function based on Yager's ordered weighted averaging (OWA) operators is used expressing operator's level of risk-aversion.

Once the priority of an alarm has been established using the means described above a risk score of the alarm can be determined. The real incident (cause) which has triggered the investigation is expected to (ideally) be a member of the set of potential incidents and have a higher probability of occurrence than any other potential incident (cause).

The "risk scenario" is defined as the ensemble of: (1) a potential (i.e. assumed) incident (in terms of its type, location, timing, etc.), (2) the known initial, i.e. current network conditions (pressures/flows, tank levels, statuses of automatically regulating devices, etc.) and (3) the assumed future network conditions (e.g. forecasted nodal demands and assumed statuses of manually controlled devices) over some risk analysis horizon (e.g. next 24hr hours). The 'do nothing' impact of a potential incident on different stakeholders (water utility and customers - see below) can then be evaluated over this time horizon by utilising the relevant pressure driven hydraulic model (e.g. impact measured in terms of water not delivered, etc.). Note that risk scenario can potentially be used as a tool for handling various uncertainties inherent in the understanding and modelling of the actual WDS (e.g. uncertain forecasted demands).

Various types of incidents can occur in WDS (e.g. water quality problems, deliberate acts of terrorism, hydraulic failures, etc.), but focus is put on pipe bursts, equipment failures and power outages.

In the past research has focused primarily on the detection of anomalies in pressure and flow data obtained from the network. The problem of identification and location of a particular incident causing an anomaly is, however, far from trivial. The correct identification of incidents causing alarms is fundamental for the success of a DSS such as the one described herein and is further complicated by an incomplete knowledge of the system behaviour. This lack of information is due to, for example, accuracy of measurements, calibration of models, stochastic water consumption, ongoing maintenance work, etc. More often than not, there is a need to consult several sources of information, based on different data and approaches (from asset data, to real time data to customer calls). However, their output needs to be combined and their results reconsolidated in order to improve situation knowledge and to handle uncertainty and potential conflict (see Figure 7).

The Dempster-Shafer (D-S) theory of evidence has proven to be a powerful method for dealing with uncertainty and has already been successfully applied in many other industries and also in the water sector. In this context it is utilised to combine probabilities of correct identification of a potential incident, generated by several independent bodies of evidence and to compute levels of belief and plausibility (i.e. lower and upper bounds for these probabilities). Furthermore, the credibility ($w_1$, $w_2$,..., $w_N$) of each body of evidence is dynamically adjusted based on the quality of evidence it provides and also its performance in terms of its success rate of correct identifications, (e.g. using entropy and specificity measures).

Apart from the static probability based on the strategic asset data analysis (e.g. burst frequencies), all the other basic probabilities, as shown in Figure 7, generated by (near) real-time sub-systems are time dependent and can dynamically change as new evidence becomes available. In the case of the probability of identification of an incident, the updating capability of D-S theory is effectively used to incorporate new evidence in order to reflect the current state of knowledge of the system. The updating process will utilise new data obtained from the WDS in order to increase or decrease the belief that a particular incident is the true cause of the problem.

Estimating the impact of WDS failure is complex since it involves social aspects and can be perceived differently by each stakeholder. Any disturbance in water supply can cause inconvenience to the customers in terms of low pressure or no water, interruption to industrial customers, damage to properties and, ultimately, loss of life in the case of fire. The impact model employed herein builds upon a list of basic impact factors (i.e. water and energy losses, supply interruptions, low pressure problems, discolouration and damage to third parties) as shown in Figure 8. The impact factors have been classified into two broad categories representing the parties of main interest in this research to form a value tree.

The first category of impact factors affects directly, or indirectly, the water utility and the other affects the customers. The impact of failures (potential incidents) is simulated using a pressure-driven version of EPANET and a GIS is applied to relate the physical effects of failures to the customers. GIS has been suggested as a powerful visualisation tool for water resources problems, particularly suitable for use in DSS applications. However, combining hydraulic models with a GIS is not straightforward and one faces many difficulties and challenges. The primary source of lack of correspondence between hydraulic models and a GIS stems from the different purpose of use of the two. GIS is meant to serve as spatial database whereas a model is focused on reproducing the hydraulics of the system and thus the pipe network is frequently simplified (skeletonised). Although, hydraulic models are often created based on available GIS asset data and customer records, the reverse process of correlating elements (e.g. pipes) with those in the GIS and assigning customers to demand nodes has been found challenging and introduces other uncertainty that needs to be reflected in the impact assessment (i.e. as part of the risk scenario introduced before).

Rather than calculating the impact of a failure at the time of detection, the impact model estimates the development of the incident over a specified period of time using demand forecasts to predict future water consumption. Water utilities in the UK are obliged to report their performance to the Water Services Regulation Authority (OFWAT) on a yearly basis. Some of the indicators monitored by the regulator consider the quality of service provided by the water utility. The DG2 (low pressure) and DG3 (interruptions) indicators, although being important for the water utility, do not consider the character and sensitivity of individual customers, thus, are unsatisfactory for a comprehensive impact assessment. Customers in this work are hence classified into the following groups:

- residential,
- commercial (shops, businesses, etc.),
- industrial (factories, etc.),
- critical (hospitals, schools and other vulnerable customers) and
- sub-zones representing whole DMAs whose supply depends on an affected network and for which service could thus be compromised.

Each type of customer is assigned a particular weight reflecting its criticality as it is perceived by the operators and management of a particular water utility. The weights reflecting the criticality of specific customer groups as well as the weights indicating the importance of impact factors and impact categories, as shown in Figure 8, can be obtained from industrial partners using the Analytic Hierarchy Process.

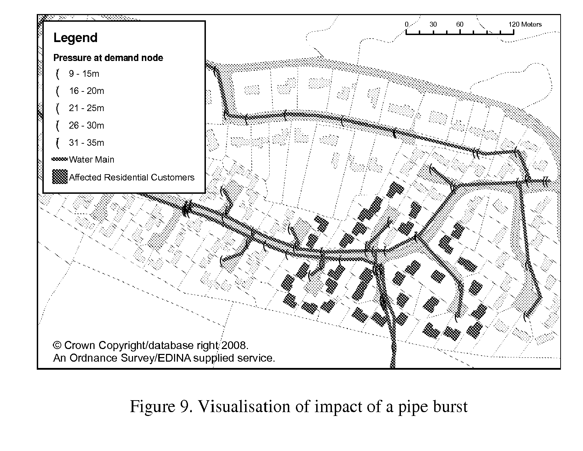

The impacts of each incident are presented to the operator using the GIS, visually indicating the spatial scale of the impact and the number and nature of affected customers. Figure 9 is a sample screen of the envisaged DSS showing the impact of a pipe burst at peak hour affecting a part of a DMA. The DSS is further able to display such impact maps for any time within a 24-hour window beginning from the time at which an alarm was raised.

Intervention Manager

The current effort on the intervention management module is concentrated on valve manipulation for isolating parts of a WDS to contain an incident to allow repairs. The module consists of the pre-generated knowledge base, developed using the techniques presented in Jun, H., and Loganathan, G. V. (2007). "Valve-controlled segments in water distribution systems." Journal of Water Resources Planning and Management-Asce, 133(2), 145-155 for the identification of segments of a WDS affected by valve closures. Particular attention is paid to considering the isolating valve size, age and perceived condition, valves on smaller diameter pipes and those which are older and those receiving less maintenance and, therefore, more likely to be inoperative. The effects of these factors are studied and contained in an offline knowledge base, which is anticipated to be updated periodically as further data, particularly from valve exercise programs, becomes available. Other types of responses, such as the manipulation of pumps, provision of by-pass, booster pumping and the use of spare or reserve capacity will subsequently be considered and incorporated into the module.

Decision support tools were principally developed in the past to address strategic design and rehabilitation issues in WDS. With the recent innovations in monitoring technologies, attempts have been made to apply them to near real-time environments. This, however, introduces new challenges in terms of strict constraints on computational time, dynamically and stochastically changing the state of the network and other uncertainties stemming from a lack of knowledge of the system and its operation. The situation is further complicated by the need to integrate data sourced from several independent systems (e.g. GIS, trend database, hydraulic models, etc.).

A risk-based approach for the development of a DSS, as described herein, offers a way of supporting the operation of a WDS under normal and particularly in failure conditions. The approach considers both the frequency of occurrence of failures and (importantly) the impact of failures to customers which is of growing importance to the water industry. The broad risk assessment process proposed in this work will allow the operators to explicitly visualise and accommodate a wider range of risks and to assist them in prioritising actions and interventions more effectively.

The methodology presented introduces a novel concept in risk-based operation for WDS under failure conditions, proposes a new definition of risk - appropriate for operational conditions - and extends existing impact models to account for further impact classes.

**Claims**

1. A control method for use in the evaluation of faults in a water distribution system, the method comprising the steps of

   a) receiving a fault notification indicative of a problem in the water distribution system;
   b) determining from the fault notification a series of potential causes of the notified fault;
   c) determining, for each potential cause, an impact evaluation;
   d) aggregating the impact evaluations for each potential cause to derive an importance indication for the notified fault.

2. The method according to claim 1, wherein the step of determining an impact evaluation for each potential cause includes a risk scenario with initial network conditions and assumed future network conditions of the water distribution system.

3. The method according to claim 2, wherein the assumed future network conditions include a nodal demand forecast.

4. The method according to claim 1, wherein the step of determining an impact evaluation for each potential cause includes determining the likelihood of that potential cause being the actual cause giving rise to the fault notification.

5. The method according to claim 1, wherein the impact evaluation is dependent upon the type and/or number of customers affected by the notified fault.

6. The method according to claim 1, wherein the importance indication is used to determine how quickly the notified fault requires a response.

7. The method according to claim 1, wherein the importance indication is used to determine a priority or order in which a series of notified faults should be investigated.

8. The method according to claim 1, wherein the importance indication is used to determine the effects of various solutions to a reported fault.

(A) DMA E025                  (B) DMA E020

**Figure 1a**                       **Figure 1b**

Figure 2. Pressure at critical point in the DMA E025

Figure 3. Pressure upstream and downstream of a PRV at DMA E025 inlet

Figure 4. A typical work flow of operation of WDS under failure conditions

Figure 5. Simplified Risk-based DSS architecture

Figure 6. Estimation of risk imposed by an anomaly

Figure 7. Combination of sources of evidence in D-S theory

Figure 8. Weighted value tree of incident impact

Figure 9. Visualisation of impact of a pipe burst

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Implementation of pressure and leakage management strategies on the gold coast, Australiantegrated energy and water conservation modeling. **GIRARD, M. ; STEWART, R. A.** Journal of Water Resources Planning and Management. ASCE, 2007, vol. 133, 210-217
- **BRAGALLI, C. ; SACCHI, S.** Burst frequency and leakage related to pressure control in water distribution network. *Proceedings of IWA Special Conference 'Managing Leakage,* November 2002, 80-94
- Leakage control policy and practice. Standing Technical Committee Report. International Water Association - Water Loss Task Force
- **FANTOZZI, M. ; LAMBERT, A.** Including the effects of Pressure Management in calculations of Economic Leakage Level. *Proceedings of IWA Special Conference 'Water Loss 2007',* 23 September 2007, 256-267
- **PEARSON, D. ; FANTOZZI, M. ; SOARES, D. ; WALDRON, T.** Searching for N2: How does Pressure Reduction reduce Burst Frequency?. *Proceedings of IWA Special Conference 'Leakage 2005',* 12 September 2005, 368-381
- Leakage Index Curve and the Longer Term Effects of Pressure Management. *Report 03/WM/08/29,* 2003, ISBN 1084057-280-9
- **THORNTON, J. ; LAMBERT, A.** Progress in Practical Prediction of Pressure: Leakage, Pressure: Burst Frequency and Pressure: Consumption Relationships. *Proceedings of IWA Special Conference 'Leakage 2005',* 12 September 2005, 347-357
- **DEMONSABERT, S. ; LINER, B. L.** Integrated energy and water conservation modeling. *Journal of Energy Engineering, ASCE,* 1998, vol. 124 (1), 1-19
- **HICKS, T. G.** Handbook of Civil Engineering Galculations. McGraw-Hill, 1999
- **JUN, H. ; LOGANATHAN, G. V.** Valve-controlled segments in water distribution systems. *Journal of Water Resources Planning and Management-Asce,* 2007, vol. 133 (2), 145-155